# FASCICULE DE BREVET EUROPEEN

(11) **EP 0 849 709 B1**
(45) Date de publication et mention de la délivrance du brevet: **10.07.2002**
(21) Numéro de dépôt: 97410143.8
(22) Date de dépôt: 16.12.1997
(51) Int. Cl.: G06T 9/00

(54) **Processeur d'image digitale pour la compression/décompression d'images animées**
Digitaler Bildprozessor zur Bewegtbildkompression/-dekompression
Digital image processor for moving image compression/decompression

(30) Priorité: 17.12.1996 FR 9615912
(43) Date de publication de la demande: 24.06.1998
(73) Titulaire: STMicroelectronics S.A., 92120 Montrouge (FR)
(72) Inventeur: Deygas, Olivier, 38400 Saint Martin d'Hères (FR); Harrand, Michel, 38120 Saint Egrève (FR)
(74) Mandataire: de Beaumont, Michel

(56) Documents cités:
- RAO S K ET AL: "A real time P*64/MPEG video encoder chip" 1993 IEEE INTERNATIONAL SOLID-STATE CIRCUITS CONFERENCE. DIGEST OF TECHNICAL PAPERS. ISSCC. FIRST EDITION (CAT. NO.93CH3272-2), PROCEEDINGS OF IEEE INTERNATIONAL SOLID-STATE CIRCUITS CONFERENCE - ISSCC '93, SAN FRANCISCO, CA, USA, 24-26 FEB. 1993, ISBN 0-7803-0987-1, 1993, NEW YORK, NY, USA, IEEE, USA, pages 32-33, 257, XP000670798
- HARRAND M ET AL: "A single chip videophone video encoder/decoder" 1995 IEEE INTERNATIONAL SOLID-STATE CIRCUITS CONFERENCE. DIGEST OF TECHNICAL PAPERS. ISSCC (CAT. NO.95CH35753), PROCEEDINGS ISSCC '95 - INTERNATIONAL SOLID-STATE CIRCUITS CONFERENCE, SAN FRANCISCO, CA, USA, 15-17 FEB. 1995, ISBN 0-7803-2495-1, 1995, NEW YORK, NY, USA, IEEE, USA, pages 292-293, 382, XP000670797
- RASSE Y: "An H.261 single-chip low bit rate video-codec" PROCEEDINGS OF THE FOURTH INTERNATIONAL CONFERENCE ON SIGNAL PROCESSING APPLICATIONS AND TECHNOLOGY, PROCEEDINGS OF THE FOURTH INTERNATIONAL CONFERENCE ON SIGNAL PROCESSING APPLICATIONS AND TECHNOLOGY. ICSPAT '93, SANTA CLARA, CA, USA, 28 SEPT.-1 OCT, 1993, NEWTON, MA, USA, DSP ASSOCIATES, USA, pages 22-31 vol.1, XP000670777
- KUN-MIN YANG ET AL: "VLSI ARCHITECTURE DESIGN OF A VERSATILE VARIABLE LENGTH DECODING CHIP FOR REAL-TIME VIDEO CODECS" PROCEEDINGS OF THE REGION 10 CONFERENCE ON COMPUTER AND COMMUNICATI SYSTEMS (TENCON), HONG KONG, 24 - 27 SEPT., 1990, vol. 2 OF 2, 24 septembre 1990, INSTITUTE OF ELECTRICAL AND ELECTRONICS ENGINEERS, pages 551-554, XP000235934
- BRINTHAUPT D ET AL: "A VIDEO DECODER FOR H.261 VIDEO TELECONFERENCING AND MPEG STORED INTERACTIVE VIDEO APPLICATIONS" IEEE: INTERNATIONAL SOLID - STATE CIRCUITS CONFERENCE, 24 février 1993, page 34/35 XP000609672
- EIJI KOMOTO ET AL: "A 110MHZ MPEG2 VARIABLE LENGTH DECODER LSI" SYMPOSIUM ON VLSI CIRCUITS. DIGEST OF TECHNICAL PAPERS, HONOLULU, JUNE 9 - 11, 1994, 9 juin 1994, INSTITUTE OF ELECTRICAL AND ELECTRONICS ENGINEERS, page 71/72 XP000501027
- FAIRFIELD D J: "A MULTI-STANDARD VIDEO CODEC ARCHITECTURE FOR THE ISA/VL BUS" PROCEEDINGS OF THE INTERNATIONAL CONFERENCE ON SIGNAL PROCESSING APPLICATIONS AND TECHNOLOGY, vol. 2, 18 octobre 1994, pages 1173-1178, XP000602802

## Description

La présente invention concerne un système de compression/décompression d'images animées, notamment selon les normes H.261 et H.263. La présente invention concerne plus particulièrement le sous-ensemble d'un tel système servant au traitement des flux de bits codés transmis entre deux tels systèmes.

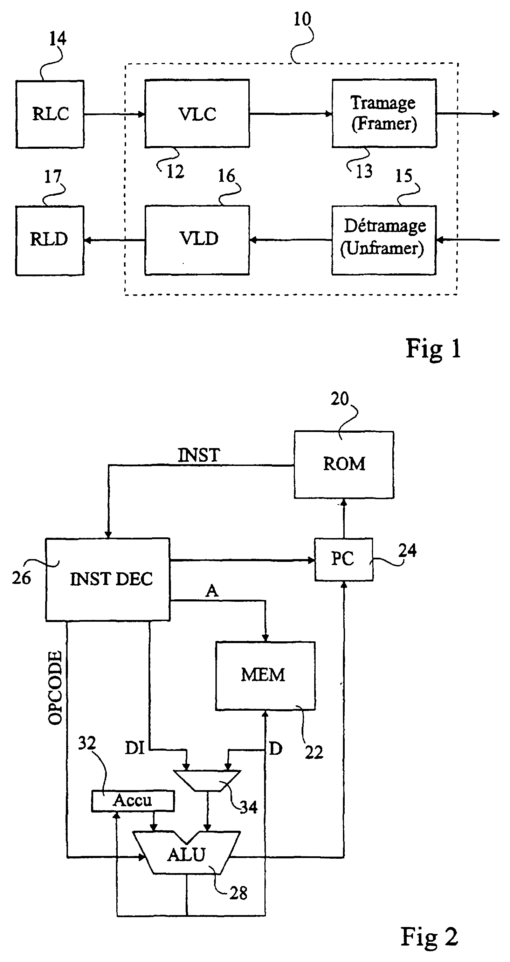

La figure 1 représente schématiquement un tel sous-ensemble 10. Ce sous-ensemble comprend un bloc 12 de codage à longueur variable (VLC), ou Huffman, fournissant des codes de longueur variable à un bloc de mise en trames (tramage) 13. Ce bloc 13 délivre un flux série de bits destiné à être décodé par un circuit récepteur.

Le bloc VLC reçoit généralement des données provenant d'un codage de chaînes de zéros (RLC) 14. Un tel codage consiste à transformer une chaîne de zéros suivie d'une valeur non-nulle en un couple de valeurs dont la première ("run" ou chaîne) indique le nombre de zéros précédant la valeur non-nulle, et la deuxième ("level" ou niveau) fournit la valeur non-nulle.

Un circuit récepteur, également faisant partie du sous-ensemble 10, comporte un bloc de traitement de trames (détramage) 15 suivi d'un bloc de décodage à longueur variable (VLD) 16 pour effectuer les opérations réciproques au tramage 13 et au codage VLC 12.

Le décodage VLD 16 est généralement suivi d'un décodage de chaînes de zéros (RLD) 17, réciproque au codage RLC.

Un codage VLC ou de Huffman consiste à remplacer chaque couple chaîne-niveau par un code dont la longueur (de 2 à 12 bits pour les normes H.261 et H.263) est d'autant plus faible que la probabilité de survenue du couple est grande. Ces codes de longueur variable sont cherchés dans des tables de correspondance et concaténés pour former une séquence de codes contigus. Le rôle du circuit de tramage 14 est d'insérer les codes concaténés dans des trames comportant diverses informations, notamment des codes correcteurs d'erreurs. Ces trames sont définies par les normes H.261 et H.263 ou par les normes H.221 et H.223 qui peuvent être utilisées conjointement aux normes H.261 et H.263.

L'article "A real lime P*64/MPEG video encoder chip" de Rao et al., IEEE Int. Solid-State Circuits Conference ISSCC 1993, pages 32-33, IEEE Press, NY, USA, divulgue une puce de codage d'images animées selon la norme CCITT H.261, qui comprend un processeur spécial pour le codage de longueur variable. Il parle aussi de la combinaison des processeurs programmables avec des instructions d'un matériel dédié afin d'obtenir la flexibilité et l'efficacité nécessaire pour le codage en temps réel.

L'article "A single chip videophone encoder/decoder" de Harrand et al., IEEE Int. Solid-State Circuits Conférence ISSCC 1995, pages 292-293, IEEE Press, NY, USA, présente un codeur/décodeur sur une seule puce pour un visiophone. Il est indiqué que les opérations les plus importantes dans l'algorithme de codage/décodage sont réalisées par des opérateurs purement câblés, afin de minimaliser l'encombrement de ces opérations, pendant que les autres opérations sont implantées par un microprocesseur de puissance basse.

L'article "An H.261 single-chip low bit rate video-codec" de Rasse et al., Proc. 4th Int. Conference on Signal Processing Applications and Technology ICSPAT 1993, pages 22-31, DSP Associates, USA, révèle un codeur/décodeur H.261 sur une seule puce comprenant quatre modules pour des algorithmes pertinents, y compris un dédié au codage de longueur variable, au multiplexage vidéo et au traitement du code de correction d'erreurs.

Les opérations du sous-ensemble 10 sont généralement effectuées de manière câblée. En effet, si l'on voulait utiliser un microprocesseur d'usage général programmé pour effectuer ces opérations, la puissance de calcul serait trop importante pour que le coût du microprocesseur soit raisonnable. Ceci reste vrai dans le cadre de la norme H.263 où les flux de bits ont un débit particulièrement bas (adapté aux lignes téléphoniques du réseau commuté).

Pourtant, l'utilisation d'un microprocesseur pour effectuer les opérations du sous-ensemble 10 serait particulièrement avantageuse du fait qu'elle permettrait une adaptation particulièrement aisée à des variations des normes par une simple modification de programme sans devoir reconcevoir entièrement le sous-ensemble.

Un objet de la présente invention est de permettre la réalisation des fonctions du sous-ensemble de traitement de flux de bits à l'aide d'un microprocesseur de puissance particulièrement faible.

Pour atteindre cet objet, la présente invention prévoit d'utiliser un microprocesseur d'usage général comportant des opérateurs câblés dédiés à des opérations spécifiques rencontrées dans le traitement de flux de bits selon les normes H.261, H.263, H.221, ou H.223. Ces opérateurs dédiés sont actionnés par des instructions spécifiques qui sont ajoutées à un jeu d'instructions classique. En choisissant bien les fonctions des opérateurs dédiés, la puissance du microprocesseur peut être rendue si faible que le coût du sous-ensemble résultant devient même inférieur à celui d'un sous-ensemble purement câblé.

Selon un aspect de l'invention, les opérations pour lesquelles on prévoit un opérateur dédié sont la concaténation des codes de longueur variable pour fournir une séquence de codes contigus, l'extraction des codes de longueur variable d'une telle séquence, et le calcul d'une signature sur une séquence de bits. De préférence, le microprocesseur comportera un opérateur permettant d'effectuer les trois opérations, mais on remarquera que l'utilisation d'un opérateur permettant d'effectuer une seule de ces trois opérations permet d'obtenir des gains significatifs de puissance de calcul.

Ainsi, une première version de microprocesseur selon la présente invention comprend un opérateur dédié à une concaténation de codes de longueur variable pour former une séquence de codes contigus, l'opérateur étant associé à une instruction dédiée utilisant deux paramètres dont un premier est un mot contenant un groupe de bits et dont le deuxième indique la longueur du groupe de bits, l'opérateur réagissant à l'instruction dédiée en isolant dans le premier paramètre le groupe de bits ayant la longueur indiquée par le deuxième paramètre et en insérant le groupe de bits ainsi isolé dans un registre de travail, en concaténation avec un groupe de bits qui a été inséré dans le registre de travail par une précédente exécution de l'instruction dédiée.

Selon un mode de réalisation de la présente invention, l'opérateur comprend un registre témoin mis à jour à chaque exécution de l'instruction dédiée pour indiquer la position à partir de laquelle le groupe de bits doit être inséré dans le registre de travail.

Selon un mode de réalisation de la présente invention, lorsque le deuxième paramètre et le registre témoin indiquent que la place libre dans le registre de travail est insuffisante pour recevoir le groupe de bits, l'opérateur réagit à l'instruction dédiée en transférant le contenu du registre de travail dans un registre auxiliaire de même taille et complétant le registre auxiliaire par les premiers bits du groupe ; en insérant les bits restants du groupe au début du registre de travail ; et en mettant à jour le registre témoin pour indiquer la position suivant immédiatement lesdits bits restants dans le registre de travail.

Selon un mode de réalisation de la présente invention, le registre témoin indique la place libre dans le registre de travail, et l'opérateur comprend des moyens pour mettre à jour le registre témoin par la différence entre son contenu et le deuxième paramètre si le signe de cette différence est positif, et par la somme de ladite différence et de la taille du registre de travail si le signe est négatif.

Une deuxième version de microprocesseur selon la présente invention comprend un opérateur dédié à une extraction de codes de longueur variable d'une séquence de codes contigus, l'opérateur étant associé à une instruction dédiée utilisant un paramètre qui indique la longueur d'un groupe de bits à extraire, l'opérateur réagissant à l'instruction en extrayant d'un registre de travail le nombre de bits indiqué par ledit paramètre, en partant de la fin d'un groupe de bits qui a été extrait du registre de travail par une précédente exécution de l'instruction dédiée.

Selon un mode de réalisation de la présente invention, l'opérateur comprend un registre témoin mis à jour à chaque exécution de l'instruction dédiée pour indiquer la position à partir de laquelle le groupe de bits doit être extrait du registre de travail.

Selon un mode de réalisation de la présente invention, lorsque ledit paramètre et le registre témoin indiquent que les derniers bits à extraire du registre de travail sont en nombre insuffisant pour former le groupe, l'opérateur réagit à l'instruction dédiée en extrayant les derniers bits du registre de travail et les bits manquants pour compléter le groupe à la fin d'un registre auxiliaire de même taille que le registre de travail ; en transférant le contenu du registre auxiliaire dans le registre de travail ; et en mettant à jour le registre témoin pour indiquer la position suivant immédiatement lesdits bits manquants dans le registre de travail.

Selon un mode de réalisation de la présente invention, le registre témoin indique le nombre de bits restant à extraire du registre de travail, et l'opérateur comprend des moyens pour mettre à jour le registre témoin par la différence entre son contenu et le paramètre si le signe de cette différence est positif, et par la somme de ladite différence et de la taille du registre de travail si le signe est négatif.

Une troisième version de microprocesseur selon la présente invention comprend un opérateur dédié à la concaténation ainsi qu'à l'extraction de codes de longueur variable.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, illustre dès opérations classiques effectuées dans le traitement de flux de bits dans un système de compression/décompression d'images mobiles ;
la figure 2 représente une architecture classique de microprocesseur qui pourra servir de base à réaliser un microprocesseur dédié selon l'invention ;
les figures 3A à 3C représentent un exemple d'opérateur câblé complétant le microprocesseur de la figure 2 pour effectuer une concaténation de codes de longueur variable ;
la figure 4 représente un exemple d'opérateur câblé permettant de réaliser une extraction de codes de longueur variable ; et
la figure 5 représente un exemple d'opérateur câblé permettant d'effectuer un calcul de signature.

Selon la présente invention on prévoit de réaliser de manière logicielle le traitement de flux de bits d'un système de compression/décompression d'images mobiles. La présente invention est basée sur une étude effectuée par le demandeur qui a permis de révéler les opérations qui seraient les plus coûteuses en temps de calcul si elles devaient être effectuées par un microprocesseur d'usage général. Ces opérations sont la concaténation de codes de longueur variable pour fournir une séquence de codes contigus, l'extraction de codes de longueur variable d'une séquence de codes contigus, et le calcul d'une signature sur une séquence de bits. En prévoyant un microprocesseur d'usage général classique complété par un opérateur câblé effectuant au moins une de ces opérations à l'exécution d'une instruction dédiée, la puissance du microprocesseur est significativement réduite. Par exemple, pour satisfaire à la norme H.223 (débit maximal de 500 kbits/s), un opérateur câblé dédié aux trois opérations susmentionnées permet d'utiliser un microprocesseur 8 bits cadencé à une fréquence de 54 MHz. La fréquence du microprocesseur descend à 3 MHz dans le cadre spécifique de la norme H.263 (débit maximal de 30 kbits/s).

Avant de décrire plus en détail l'invention, on décrit une architecture de microprocesseur classique dans laquelle on peut incorporer l'opérateur câblé supplémentaire selon l'invention.

La figure 2 illustre schématiquement un microprocesseur classique de type "Harvard". Ce microprocesseur comprend une mémoire ROM 20 contenant les instructions du programme à exécuter, cette mémoire ROM étant séparée d'une mémoire (ROM ou RAM) 22 dans laquelle sont stockées des données nécessaires au programme. Un compteur de programme (PC) 24 sélectionne dans la mémoire 20 l'instruction à exécuter, cette instruction étant fournie à un décodeur d'instruction 26. Ce décodeur 26 fournit un code d'opération (opcode) qui actionne un ou plusieurs opérateurs câblés correspondants dans une unité arithmétique et logique (ALU) 28. Divers registres de travail usuels, notamment un accumulateur 32, sont associés à l'unité ALU.

Selon l'instruction, le décodeur 26 fournit une adresse de saut au compteur de programme 24, une adresse A de lecture ou d'écriture à la mémoire 22, ou une donnée immédiate DI à l'unité 28. La mémoire 22, l'unité ALU 28, et l'accumulateur 32 sont reliés entre eux par un bus de données D. Un multiplexeur 34 permet de sélectionner, parmi la donnée immédiate DI et une donnée présente sur le bus D, celle qui est fournie à l'unité ALU 28. Cette sélection est effectuée par un bit du code d'opération opcode.

L'unité ALU 28 comporte divers drapeaux qui sont levés en fonction des résultats de certaines opérations. Dans le cas de l'exécution d'un saut conditionnel, un drapeau correspondant à la condition est fourni au compteur de programme 24. Selon l'état de ce drapeau, l'adresse fournie par le décodeur 26 est chargée ou non dans le compteur de programme 24.

Pour connaître le fonctionnement détaillé d'un microprocesseur du type de la figure 2, on pourra se reporter à de nombreux ouvrages sur les microprocesseurs. L'architecture de la figure 2 est donnée à titre d'exemple et l'homme du métier comprendra que l'invention peut s'appliquer à d'autres types de microprocesseur.

Un microprocesseur selon l'invention intègre dans son unité arithmétique et logique 28, outre des opérateurs câblés permettant d'effectuer les opérations classiques d'un microprocesseur d'usage général (addition, multiplication, opérations logiques, etc.), un opérateur câblé permettant d'effectuer au moins l'une des trois opérations susmentionnées, spécifiques à un traitement de flux de bits dans un système de compression/décompression d'images.

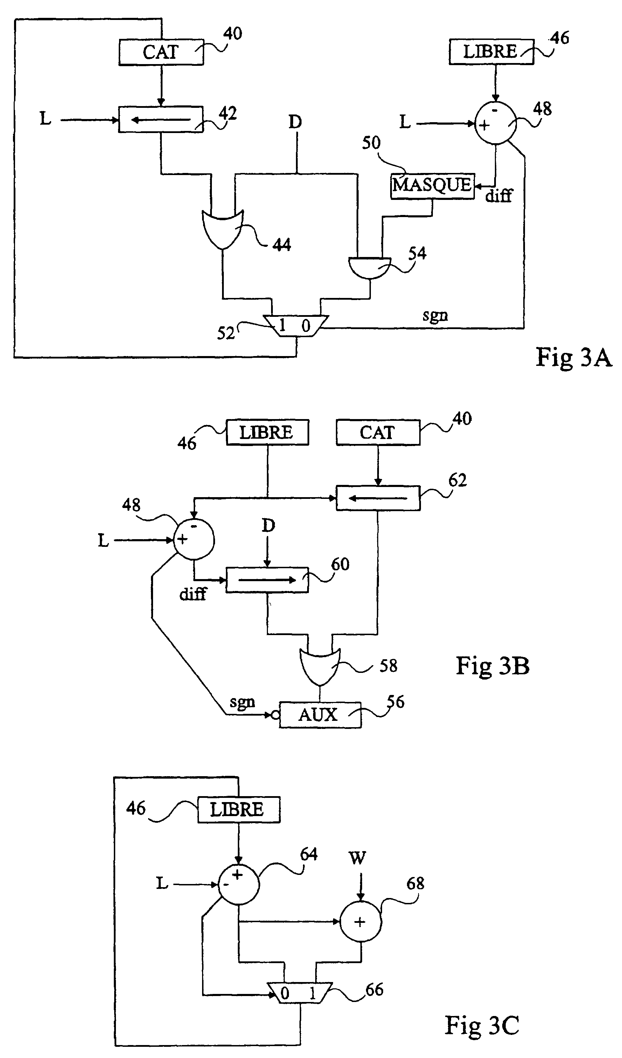

Les figures 3A à 3C représentent trois parties d'un exemple d'opérateur câblé pour effectuer la concaténation de codes de longueur variable ou Huffman. Cet opérateur répond à une instruction de concaténation spécifique que l'on appellera "CAT" et qui s'utilise avec deux paramètres. Un premier paramètre D est un mot contenant un code Huffman à concaténer, et le deuxième paramètre est un mot indiquant la longueur L du code contenu dans le premier paramètre. La largeur de ces mots sera généralement celle du bus de données D (par exemple 8 bits). Le code Huffman, de longueur non égale à la largeur du bus, est par exemple rangé à droite dans le mot qui le contient.

Le passage de ces deux paramètres s'effectue selon des mécanismes classiques. Par exemple, l'instruction CAT peut être utilisée avec une adresse indiquant l'emplacement dans la mémoire 22 du mot contenant le code Huffman à traiter. Le décodeur 26 présente alors cette adresse à la mémoire 22 et fournit un code d'opération opcode qui actionne un opérateur de lecture de la mémoire dans l'unité ALU 28. Ce code d'opération actionne en même temps l'opérateur dédié à la concaténation qui exploite, comme premier paramètre, le mot présent sur le bus de données D et, comme deuxième paramètre, un mot contenu dans l'accumulateur 32, par exemple. Le programmeur veille à ce que la longueur L du code soit chargée par tout moyen classique dans l'accumulateur 32 juste avant l'exécution de l'instruction CAT.

La fonction particulière de l'instruction CAT et de l'opérateur associé est de concaténer L bits du premier paramètre D à des bits précédemment insérés dans un registre spécifique "CAT". Pour illustrer cette fonction à titre d'exemple, on suppose que le registre spécifique CAT, de 8 bits, contient 0000 1234, où 1234 sont des bits précédemment insérés dans le registre.

Si le registre CAT dispose de suffisamment de place pour recevoir les L bits du code à concaténer, par exemple si le paramètre D vaut 0000 0ABC, où ABC sont les bits du code, on souhaite mettre à jour le registre CAT par la valeur 0123 4ABC, en supposant que les bits des codes sont à fournir poids forts en tête.

Si le registre CAT ne contient pas suffisamment de place pour recevoir le code, par exemple si le paramètre D vaut 00AB CDEF, on souhaite mettre à jour le registre CAT par la valeur 0000 OOEF et transférer dans un registre auxiliaire AUX la valeur 1234 ABCD. A chaque fois que le registre auxiliaire est ainsi mis à jour, il contient une séquence successive de bits appartenant à des codes contigus ou concaténés.

A la figure 3A, le registre spécifique CAT est désigné par 40. Le contenu du registre CAT est fourni à un circuit de décalage à gauche du nombre de bits indiqué par le paramètre L. Une porte OU bit à bit 44 reçoit la sortie du circuit de décalage 42 et le mot D contenant le code Huffman à concaténer.

Un registre (LIBRE) 46 indique l'espace libre dans le registre CAT pour recevoir un nouveau code. Un soustracteur 48 effectue la différence entre le paramètre L et le contenu du registre 46. Cette différence est fournie à un générateur de masque 50 et le signe sgn de la différence commande un multiplexeur 52. Si le signe est négatif, indiquant que l'espace libre dans le registre CAT est suffisant pour recevoir le code à concaténer, le multiplexeur 52 choisit la sortie de la porte 44 pour mettre à jour le contenu du registre CAT. Si le signe est positif, c'est-à-dire si le registre CAT ne contient pas suffisamment de place pour recevoir le code à concaténer, le multiplexeur 52 choisit la sortie d'une porte ET bit à bit 54 pour mettre à jour le contenu du registre CAT. La porte ET 54 reçoit le mot D contenant le code à concaténer et le masque créé par le générateur de masque 50. Tous les bits du masque sont à zéro sauf un nombre de bits de poids faible égal à la différence fournie par le soustracteur 48.

En reprenant le premier exemple susmentionné, le registre CAT contient la valeur 0000 1234, le mot D vaut 0000 0ABC, le paramètre L vaut 3, et le registre 46, indiquant la place libre dans le registre CAT, contient la valeur 4. Le circuit de décalage à gauche 42 fournit la valeur 0123 4000 qui, combinée par la porte OU 44 au mot D, fournit bien la valeur 0123 4ABC. Le multiplexeur 52 sélectionne cette valeur pour la mise à jour du registre CAT du fait que la différence entre le paramètre L et le contenu du registre 46 est négative.

En reprenant le deuxième exemple susmentionné, le mot D vaut 00AB CDEF, le paramètre L vaut 6, et l'espace libre, contenu dans le registre 46, vaut 4. Le multiplexeur 52 sélectionne alors la sortie de la porte ET 54. Le masque 50 valant 0000 0011, la valeur par laquelle est mise à jour le registre CAT est 0000 00EF. Ainsi, les derniers bits du code sont insérés au début du registre CAT.

A la figure 3B, on désigne par 56 le registre auxiliaire AUX susmentionné, dans lequel on transfère le contenu précédent du registre CAT, complété par les premiers bits du code. Ce registre AUX reçoit la sortie d'une porte OU bit à bit 58. Une première entrée de cette porte 58 reçoit la sortie d'un circuit 60 de décalage à droite du mot D. La quantité de décalage de ce circuit 60 est déterminée par la différence fournie par le soustracteur 48.

Une deuxième entrée de la porte OU 58 reçoit la sortie d'un circuit 62 de décalage à gauche du contenu du registre CAT. La quantité de décalage du circuit 62 est déterminée par le contenu du registre 46. Le registre auxiliaire 56 charge la sortie de la porte 58 lorsque le signe de la différence fournie par le soustracteur 48 est positif.

Dans l'exemple susmentionné où le mot D vaut 00AB CDEF, la sortie du circuit de décalage 62 vaut 1234 0000, tandis que la sortie du circuit de décalage 60 vaut 0000 ABCD. La sortie de la porte 58 fournit alors bien la valeur escomptée 1234 ABCD au registre auxiliaire 56.

La figure 3C illustre un exemple de circuit permettant de mettre à jour le registre 46 pour que celui-ci indique la place libre dans le registre CAT à chaque concaténation (à chaque exécution de l'instruction CAT). Un soustracteur 64 fournit à une première entrée d'un multiplexeur 66 la différence entre le contenu du registre 46 et le paramètre L. Cette différence est également fournie à un additionneur 68 qui reçoit par ailleurs une valeur fixe w égale à la taille du registre CAT (8 dans les exemples). La sortie de cet additionneur 68 est fournie à la deuxième entrée du multiplexeur 66. Le multiplexeur 66 sélectionne, pour mettre à jour le contenu du registre 46, la sortie du soustracteur 64 si le signe de la différence qu'il fournit est positif, et sélectionne la sortie de l'additionneur 68 si le signe est négatif.

La façon dont l'instruction CAT est utilisée et combinée à des instructions classiques est laissée libre au programmeur et sort du cadre de la présente invention. Le programmeur doit seulement veiller à ce que le contenu du registre auxiliaire 56 soit lu à chaque fois qu'il a été renouvelé. Ceci peut être effectué de diverses manières, par exemple en comparant le contenu courant du registre CAT au contenu qu'il avait lors de la précédente exécution de l'instruction CAT, ou bien en comptabilisant les longueurs successives L.

Les contenus successifs du registre auxiliaire 56 sont par exemple stockés à des adresses consécutives de la mémoire 22 pour former une succession de codes contigus.

Dans le cadre d'un codage à longueur variable, la correspondance entre chaque couple de valeurs chaîne-niveau et un code Huffman est fournie par des tables normalisées stockées dans une mémoire ROM faisant partie de la mémoire 22. Les opérations de recherche d'un code Huffman dans les tables peuvent être effectuées suffisamment efficacement par une suite d'instructions d'usage général. Une fois que la recherche est achevée, le code trouvé et sa longueur sont stockés à des adresses prédéfinies. Alors, par exemple, la longueur est écrite dans l'accumulateur 32 par une instruction classique et on exécute immédiatement après l'instruction CAT avec l'adresse du code trouvé.

La succession de codes contigus générée à partir des contenus successifs du registre auxiliaire 56 est soumise à des opérations de mise en trame selon les normes H.221 ou H.223. Une partie des opérations de mise en trame est de préférence effectuée à l'aide d'un opérateur dédié décrit ultérieurement.

Il peut arriver que la longueur d'un code soit supérieure à la largeur du bus de données et du registre CAT. Dans ce cas, le code est fractionné et les fractions du code sont traitées par des instructions CAT successives.

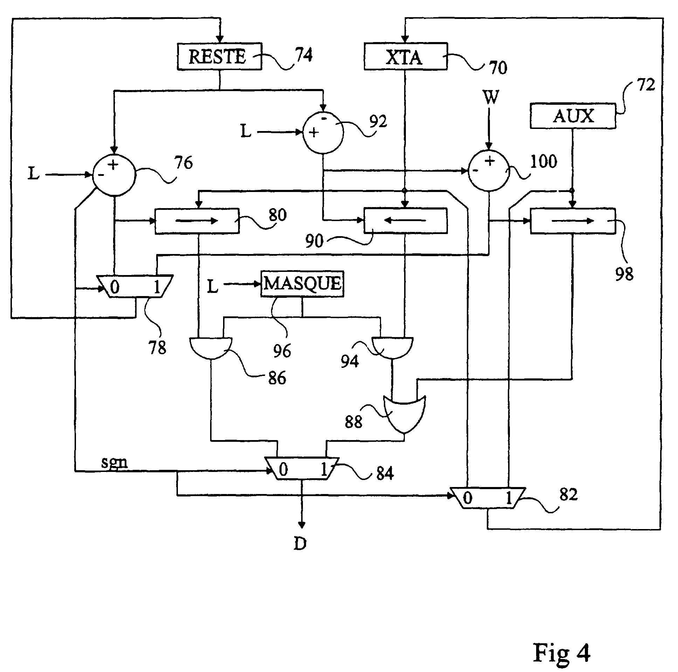

La figure 4 représente schématiquement un exemple d'opérateur câblé dédié à l'extraction de codes de Huffman d'une séquence de codes contigus ou concaténés. Cet opérateur répond à une instruction spécifique que l'on appellera "XTA" et qui s'utilise avec, comme paramètre, la longueur L d'un code à extraire. L'instruction XTA est en fait réciproque à l'instruction CAT.

La fonction particulière de l'instruction XTA et de l'opérateur associé est d'extraire L bits consécutifs dans un registre spécifique XTA 70 immédiatement après des bits précédemment extraits. Le registre XTA stocke une partie successive d'une séquence de codes en cours de traitement.

Si le nombre de bits à extraire est supérieur au nombre de bits restant effectivement à extraire du registre XTA, les bits manquants sont pris au début d'un registre auxiliaire AUX. Le nombre de bits restant à extraire du registre XTA est indiqué par un registre (RESTE) 74.

Un soustracteur 76 délivre la différence entre la longueur L fournie par l'instruction XTA et le contenu RESTE du registre 74 à une première entrée d'un multiplexeur 78 et à une entrée de commande d'un circuit de décalage à droite 80. Un multiplexeur 82 met à jour le contenu du registre XTA par lui-même lorsque le signe sgn de cette différence est positif, et par le contenu du registre auxiliaire 72 si ce signe est négatif. Le signe sgn commande également un multiplexeur 84 qui reçoit sur une première entrée la sortie d'une porte ET bit à bit 86 et sur une deuxième entrée la sortie d'une porte OU bit à bit 88. La sortie du multiplexeur 84 fournit un mot D contenant les bits extraits, rangés à droite. Si le signe sgn est positif, le multiplexeur 84 sélectionne la sortie de la porte 86 pour le mot D, sinon la sortie de la porte 88.

Le mot D est fourni, par exemple, sur le bus de données. Dans ce cas, l'instruction XTA est utilisée avec un paramètre supplémentaire qui est l'adresse à laquelle doit être écrit le mot D. Selon une variante, le mot D pourra être écrit dans un registre, par exemple l'accumulateur 32, où il sera lu par une instruction ultérieure.

Le contenu du registre XTA est fourni à l'entrée du circuit de décalage à droite 80 et à l'entrée d'un circuit de décalage à gauche 90. Un soustracteur 92 fournit comme commande au circuit de décalage 90 la différence entre la longueur L et le contenu RESTE du registre 74. Les sorties des circuits de décalage 80 et 90 sont fournies respectivement aux premières entrées de la porte 86 et d'une porte ET bit à bit 94. Les deuxièmes entrées des portes 86 et 94 reçoivent la sortie d'un générateur de masque 96 commandé par la longueur L.

La porte OU 88 reçoit sur une première entrée la sortie de la porte 94 et, sur une deuxième entrée, la sortie d'un circuit de décalage à droite 98. Ce circuit de décalage 98 reçoit le contenu du registre auxiliaire 72 et est commandé par un soustracteur 100 qui fournit la différence entre une valeur fixe w, correspondant à la taille du registre XTA, et la valeur fournie par le soustracteur 92.

La différence fournie par le soustracteur 100 est également fournie à une deuxième entrée du multiplexeur 78 qui met à jour le contenu RESTE du registre 74 par la différence fournie par le soustracteur 76 si cette différence est positive, et par la différence fournie par le soustracteur 100 sinon.

A titre d'exemple, on suppose que le registre XTA contient la valeur XXAB CDXX, où ABCD sont quatre bits à extraire. Ainsi, on a L = 4 et RESTE = 6. Le circuit 80 décale à droite le contenu du registre XTA de 2, et fournit donc la valeur OOXX ABCD. Le masque fourni par le circuit 96 vaut 00001111. La sortie de la porte ET 96, transmise en tant que mot D par le multiplexeur 84, fournit la valeur souhaitée 0000 ABCD.

Le contenu RESTE du registre 74 est mis à jour par la valeur 2 fournie par le soustracteur 76. Le contenu du registre XTA reste inchangé, mais le registre 74 indique qu'il reste seulement 2 bits à extraire du registre XTA à la prochaine exécution de l'instruction XTA.

Dans l'exemple suivant, le code à extraire est trop long par rapport aux bits restant à extraire du registre XTA. On suppose que le code à extraire comporte 5 bits ABCDE (L = 5) et que le registre XTA contient la valeur XXXX XABC (RESTE = 3). Le code se trouve à cheval sur la fin du registre XTA et le début du registre auxiliaire 72 qui contient la valeur DEXX XXXX. Le circuit 90 décale le contenu du registre XTA de deux bits vers la gauche, et fournit donc la valeur XXXA BCOO. Le masque fourni par le générateur 96 vaut 0001 1111, d'où il résulte que la porte ET 94 fournit la valeur 000A BC00. Le circuit 98 décale le contenu du registre auxiliaire 72 de 6 bits vers la droite, et fournit donc la valeur 0000 00DE. La sortie de la porte OU 88, qui est sélectionnée par le multiplexeur 84, fournit la valeur souhaitée 000A BCDE pour le mot D.

Le registre XTA est mis à jour par le contenu du registre auxiliaire 72 tandis que le registre 74 est mis à jour par la valeur 6 fournie par le soustracteur 100. Ainsi, le registre XTA reçoit la valeur DEXX XXXX, tandis que le registre 74 indique qu'il reste 6 bits à extraire du registre XTA à la prochaine exécution de l'instruction XTA, à savoir les 6 bits "X".

La façon dont l'instruction XTA est utilisée et combinée à des instructions classiques est laissée libre au programmeur et sort du cadre de la présente invention. Le programmeur doit seulement veiller à ce que le contenu du registre auxiliaire 72 soit renouvelé à chaque fois qu'il a été transféré dans le registre XTA. Ceci peut être effectué de diverses manières, par exemple en comparant le contenu courant du registre XTA au contenu qu'il avait lors de la précédente exécution de l'instruction XTA, ou bien en comptabilisant les longueurs successives L.

Dans le cadre d'un décodage à longueur variable, la séquence de bits à traiter est, par exemple, stockée en mémoire par mots à des adresses consécutives. Au début du traitement de la séquence, les deux premiers mots de la séquence sont écrits respectivement dans les registres XTA et auxiliaire 72, tandis que le registre 74 est initialisé à la valeur 8 (la taille du registre XTA). Les mots suivants de la séquence seront écrits successivement dans le registre auxiliaire 72 au fur et à mesure que le contenu du registre XTA est renouvelé par les transferts automatiques des contenus successifs du registre auxiliaire 72.

La longueur L d'un code à extraire n'est pas connue à l'avance. Ainsi, avant d'extraire un code, il faut trouver sa longueur L, ce qui est effectué en examinant le début du code bit par bit. En effet, les premiers bits d'un code de Huffman déterminent la longueur du code par référence aux tables de Huffman stockées dans la mémoire 22. Plus spécifiquement, les tables de Huffman sont organisées en sous-tables de manière hiérarchique et chaque bit successif du code identifie une sous-table de niveau hiérarchique inférieur par rapport à la sous-table identifiée par le bit précédent. Lorsqu'un nombre indéterminé de premiers bits a été examiné, une sous-table spécifique est identifiée, qui ne contient que des codes de même longueur. On connaît la longueur du code à ce moment. La traduction du code se trouve dans cette table et est identifiée par les bits non encore examinés du code.

L'extraction un par un des premiers bits de chaque code peut avantageusement être effectuée par des exécutions successives de l'instruction XTA avec L = 1. Une fois que la longueur du code a été trouvée, on exécute l'instruction XTA avec le paramètre L égal à la longueur du code, diminuée du nombre de premiers bits examinés. Cette opération extrait les bits non encore examinés du code qui permettent de trouver la traduction du code dans la sous-table qui a été identifiée par les premiers bits.

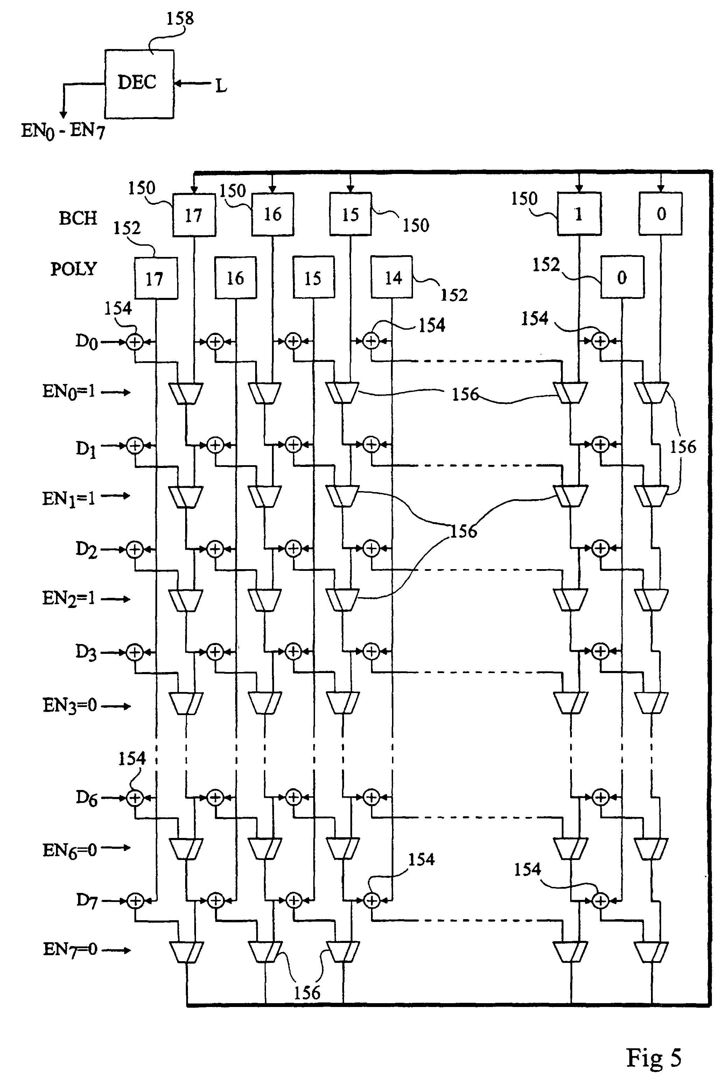

La figure 5 représente un exemple d'opérateur dédié à un calcul de signature sur une séquence de bits, cette signature étant destinée à permettre une détection et/ou une correction d'erreurs qui se sont produites dans la séquence. Cet opérateur est associé à une instruction que l'on appellera "BCH" qui utilise deux paramètres, l'un étant un mot D contenant un groupe de bits sur lesquels il faut calculer la signature, et le deuxième étant la longueur L du groupe de bits. Le groupe de bits à traiter est, par exemple, rangé à droite dans le mot D.

Les codes concaténés fournis par le codage à longueur variable sont mis dans des trames comportant un nombre de bits fixe selon les normes H.221, H.261 et H.263. Selon la norme H.223, le nombre de bits des trames est variable. Dans chaque trame on insère une signature appelée BCH qui correspond au reste de la division du polynôme constitué de la séquence de bits de la trame par un polynôme générateur spécifique. Ce polynôme générateur est de degré 4 pour la norme H.221, de degré 8 ou 15 pour la norme H.223, et de degré 18 pour les normes H.261 et H.263.

Dans une réalisation câblée de la division polynomiale, on insère successivement chaque bit de la séquence à traiter dans un registre à décalage. Le contenu de ce registre à décalage est renouvelé, pour chaque bit inséré, par une opération OU exclusif bit à bit entre le contenu du registre et les coefficients du polynôme générateur. Lorsque tous les bits de la séquence ont été fournis au registre à décalage, celui-ci contient la signature BCH recherchée, qui est insérée dans une trame à l'émission.

A la réception, on effectue ces mêmes opérations sur l'ensemble des bits d'une trame, y compris sur la signature BCH insérée à l'émission. Si la signature alors trouvée est nulle, aucune erreur ne s'est produite dans la transmission. Si la signature est non-nulle, il s'est produit une erreur de transmission et cette signature non-nulle permet de corriger un bit dans le cadre des normes H.261 et H.263. Pour ce faire, on insère des zéros successifs dans le registre à décalage contenant la signature. Si après avoir inséré le i-ème zéro, le premier bit du registre à décalage est à 1 tandis que les autres bits sont à 0, cela signifie que le i-ème bit de la trame est erroné. Dans le cas contraire, et si le nombre de zéros insérés dans le registre à décalage dépasse la longueur de la trame, l'erreur est incorrigible.

La fonction particulière de l'instruction BCH et de l'opérateur associé est de permettre le calcul d'une signature BCH en traitant une séquence de bits par groupes successifs de bits au lieu de la traiter bit par bit, la mise à jour de la signature pour chaque groupe successif s'effectuant en un cycle d'instruction.

La figure 5 représente l'opérateur dans l'exemple particulier d'un microprocesseur 8 bits dans lequel on pourra traiter des groupes d'au plus 8 bits D₀ à D₇. La signature BCH en cours de calcul est contenue dans un registre BCH constitué de n bascules 150 numérotées à partir de O (l'exemple représenté correspond à la norme H.261 ou H.263 où n = 18). Les coefficients du polynôme générateur sont contenus dans un registre POLY constitué de bascules 152, également au nombre de 18, numérotées de 0 à 17. Pour chaque bit potentiel Dⱼ à traiter, il est prévu une rangée de 18 portes OU exclusif 154 à deux entrées. Les portes OU exclusif sont symbolisées par des additionneurs car, dans le corps de Galois sur lequel sont définis les calculs polynomiaux, les opérations OU exclusif sont en fait des additions.

Dans la première rangée, la i-ème porte OU exclusif 154, sauf la dernière de la rangée, reçoit le i-ème bit du polynôme générateur sur sa première entrée et le (i+1)ème bit de la signature BCH sur sa deuxième entrée.

La i-ème porte 154 de la j-ème rangée reçoit, sur sa première entrée, le i-ème bit du polynôme générateur et, sur sa deuxième entrée, la sortie de la (i+1)ème porte 154 de la rangée précédente. La dernière porte 154 de la j-ème rangée reçoit, sur sa première entrée, le dernier bit du polynôme générateur et, sur sa deuxième entrée, le bit Dⱼ₋₁ du mot D fourni en premier paramètre par l'instruction BCH.

Chaque porte 154 est associée à un multiplexeur 156 qui sera décrit ultérieurement. Pour l'instant, on suppose que les multiplexeurs 156 sont dans la position symbolisée dans les trois premières rangées, reliant les portes 154 entre elles de la manière qui vient d'être décrite.

Avec cette configuration, en supposant que le registre BCH contient la signature calculée sur une série de bits précédente, les portes 154 de la j-ème rangée fournissent la signature calculée sur l'ensemble de la série précédente et des bits D₀ à Dⱼ₋₁ fournis par l'instruction BCH courante. Il suffit alors de mettre à jour le registre BCH avec les sorties des portes de la j-ème rangée et d'exécuter de nouveau l'instruction BCH avec un nouveau groupe de bits pour obtenir une nouvelle signature en sortie de la rangée de portes 154 associée au nombre de bits du nouveau groupe.

Diverses méthodes peuvent être utilisées pour sélectionner les sorties de la bonne rangée de portes OU exclusif afin de mettre à jour le registre BCH.

L'exemple illustré à la figure 5 est particulièrement bien adapté à une génération du circuit à l'aide du langage VHDL. Le i-ème multiplexeur 156 de la j-ème rangée reçoit la sortie de la i-ème porte 154 de la même rangée et la sortie du i-ème multiplexeur de la rangée précédente. Le i-ème multiplexeur de la première rangée reçoit, à la place de la sortie d'un multiplexeur, le i-ème bit de la signature BCH. La deuxième entrée de la i-ème porte 154 d'une rangée, sauf celle de la dernière porte de la rangée, reçoit la sortie du (i+1)ème multiplexeur de la rangée précédente. Les sorties des multiplexeurs de la dernière rangée fournissent le nouveau contenu du registre BCH.

Les multiplexeurs de la j-ème rangée sont commandés par un signal commun ENⱼ₋₁ fourni par un décodeur 158 qui reçoit de l'instruction BCH la longueur L du groupe de bits à traiter.

Le décodeur 158, qui n'est autre qu'un générateur de masque, commande les L premières rangées de multiplexeurs (comme cela est représenté pour les trois premières rangées) pour qu'ils sélectionnent les sorties de portes 154, tandis que les multiplexeurs restants sont commandés pour qu'ils sélectionnent les sorties de multiplexeurs précédents. Dans ce cas, le calcul souhaité est effectué par les L premières rangées de portes 154, le résultat étant transmis directement au registre BCH par les multiplexeurs des rangées restantes.

L'instruction BCH, associée à son opérateur, permet de calculer une signature aussi bien à l'émission qu'à la réception. En pratique, la séquence de bits sur laquelle on calcule la signature est une séquence continue, stockée par exemple en mémoire par mots à des adresses consécutives. L'instruction BCH peut alors être utilisée avec la valeur maximale de L (8 à la figure 5) pour chaque mot successif, ce qui permet de traiter une séquence de manière particulièrement rapide. Toutefois, le fait que le paramètre L soit variable est utile car la longueur d'une séquence de bits à traiter n'est pas forcément un multiple de la largeur des mots. Ainsi, à la fin de la séquence, on devra traiter un nombre de bits inférieur à la largeur d'un mot, rangés à droite dans le mot.

Par ailleurs, l'instruction BCH sert également à effectuer le calcul d'erreur. Dans ce cas, le registre BCH contenant toujours la signature non-nulle qui vient d'être trouvée, l'instruction BCH est exécutée successivement avec comme paramètres L = 1 et D = 0, jusqu'à ce que le registre BCH contienne la valeur 100...0.

Chacun des opérateurs qui a été décrit en relation avec les figures 3A à 5 n'est bien entendu validé que pour l'exécution de l'instruction qui lui est associée. Ceci est effectué de manière classique en validant ces opérateurs par le code d'opération (opcode) fourni par le décodeur d'instruction 26.

De préférence, un microprocesseur dédié selon l'invention comprend l'ensemble des trois opérateurs pour assurer une efficacité maximale. Toutefois, si le microprocesseur ne comprenait qu'un ou deux de ces opérateurs, son efficacité présenterait une sensible amélioration par rapport à un microprocesseur d'usage général classique.

Les divers registres spécifiques des opérateurs selon la présente invention sont de même nature que des registres classiquement incorporés dans une unité ALU, et sont par conséquent accessibles par des instructions classiques destinées à manipuler les registres.

De nombreuses variantes et modifications de la présente invention apparaîtront à l'homme du métier. Les circuits des opérateurs ont été fournis à titre d'exemple seulement, et il est clair que les fonctions décrites de ces opérateurs peuvent être réalisées de diverses autres manières.

## Revendications

1. Microprocesseur **caractérisé en ce qu'**il comprend un opérateur dédié à une concaténation de codes de longueur variable pour former une séquence de codes contigus, l'opérateur étant associé à une instruction dédiée utilisant deux paramètres dont un premier (D) est un mot contenant un groupe de bits et dont le deuxième (L) indique la longueur du groupe de bits, l'opérateur réagissant à l'instruction dédiée en isolant dans le premier paramètre le groupe de bits ayant la longueur indiquée par le deuxième paramètre et en insérant le groupe de bits ainsi isolé dans un registre de travail (CAT), en concaténation avec un groupe de bits qui a été inséré dans le registre de travail par une précédente exécution de l'instruction dédiée.

2. Microprocesseur selon la revendication 1, **caractérisé en ce que** l'opérateur comprend un registre témoin (46) mis à jour à chaque exécution de l'instruction dédiée pour indiquer la position à partir de laquelle le groupe de bits doit être inséré dans le registre de travail (CAT).

3. Microprocesseur selon la revendication 2, **caractérisé en ce que**, lorsque le deuxième paramètre (L) et le registre témoin (46) indiquent que la place libre dans le registre de travail (CAT) est insuffisante pour recevoir le groupe de bits, l'opérateur réagit à l'instruction dédiée en transférant le contenu du registre de travail dans un registre auxiliaire (56) de même taille et complétant le registre auxiliaire par les premiers bits du groupe ; en insérant les bits restants du groupe au début du registre de travail (CAT) ; et en mettant à jour le registre témoin (46) pour indiquer la position suivant immédiatement lesdits bits restants dans le registre de travail.

4. Microprocesseur selon la revendication 3, **caractérisé en ce que** le registre témoin (46) indique la place libre dans le registre de travail (CAT), et **en ce que** l'opérateur comprend des moyens (64, 66, 68) pour mettre à jour le registre témoin par la différence entre son contenu et le deuxième paramètre (L) si le signe de cette différence est positif, et par la somme de ladite différence et de la taille (w) du registre de travail si le signe est négatif.

5. Microprocesseur **caractérisé en ce qu'**il comprend un opérateur dédié à une extraction de codes de longueur variable d'une séquence de codes contigus, l'opérateur étant associé à une instruction dédiée utilisant un paramètre (L) qui indique la longueur d'un groupe de bits à extraire, l'opérateur réagissant à l'instruction en extrayant d'un registre de travail (XTA) le nombre de bits indiqué par ledit paramètre, en partant de la fin d'un groupe de bits qui a été extrait du registre de travail par une précédente exécution de l'instruction dédiée.

6. Microprocesseur selon la revendication 5, **caractérisé en ce que** l'opérateur comprend un registre témoin (74) mis à jour à chaque exécution de l'instruction dédiée pour indiquer la position à partir de laquelle le groupe de bits doit être extrait du registre de travail (XTA).

7. Microprocesseur selon la revendication 6, **caractérisé en ce que**, lorsque ledit paramètre (L) et le registre témoin (74) indiquent que les derniers bits à extraire du registre de travail (XTA) sont en nombre insuffisant pour former le groupe, l'opérateur réagit à l'instruction dédiée en extrayant les derniers bits du registre de travail et les bits manquants pour compléter le groupe à la fin d'un registre auxiliaire (72) de même taille que le registre de travail ; en transférant le contenu du registre auxiliaire dans le registre de travail ; et en mettant à jour le registre témoin pour indiquer la position suivant immédiatement lesdits bits manquants dans le registre de travail.

8. Microprocesseur selon la revendication 7, **caractérisé en ce que** le registre témoin (74) indique le nombre de bits restant à extraire du registre de travail, et **en ce que** l'opérateur comprend des moyens (76, 78, 92, 100) pour mettre à jour le registre témoin par la différence entre son contenu et le paramètre (L) si le signe de cette différence est positif, et par la somme de ladite différence et de la taille (w) du registre de travail si le signe est négatif.

9. Microprocesseur selon l'une quelconque des revendications 1 à 4, en combinaison avec le microprocesseur selon l'une quelconque des revendications 5 à 8.

## Patentansprüche

1. Ein Mikroprozessor, **dadurch gekennzeichnet, daß** er einen Operator aufweist, zugewiesen bzw. gewidmet einer Verkettung von eine variable Länge aufweisenden Codes zur Bildung einer Sequenz von angrenzenden Codes, wobei der Operator assoziiert ist mit einem zugewiesenen bzw. gewidmeten Befehl, der zwei Parameter verwendet, einen ersten (D), der ein Wort ist, welches eine Gruppe von Bits enthält und einem zweiten (L), der die Länge der Gruppe von Bits anzeigt, wobei der Operator auf den gewidmeten Befehl anspricht, und zwar durch Isolierung oder Trennung im ersten Parameter der Gruppe von Bits mit der Länge angezeigt durch den zweiten Parameter und durch Einsetzen der so getrennten Bitgruppe in ein aktives Register (CAT), und zwar in Verkettung mit einer Bitgruppe, die eingesetzt wurde in das aktive Register durch eine vorherige Ausführung des gewidmeten Befehls.

2. Der Mikroprozessor nach Anspruch 1, **dadurch gekennzeichnet, daß** der Operator ein Bezugs- oder Referenzregister (46) aufweist, welches bei jeder Ausführung des gewidmeten Befehles aktualisiert (auf den neuesten Stand gebracht) wird, um die Position anzuzeigen, von der die Bitgruppe in das aktive Register (CAT) einzusetzen ist.

3. Der Mikroprozessor nach Anspruch 2, **dadurch gekennzeichnet, daß** dann, wenn der zweite Parameter (L) und das Referenzregister (46) anzeigen, daß der Vorratsraum im aktiven Register (CAT) ungenügend zum Empfang der Bitgruppe ist, der Operator auf den gewidmeten Befehl anspricht durch Transferieren oder Übertragen des Inhalts des aktiven Registers in ein Hilfsregister (56) der gleichen Größe und Füllen oder Vollenden des Hilfsregisters mit den ersten Bits der Gruppe; durch Einsetzen der verbleibenden Bits der Gruppe an dem Anfang des aktiven Registers (CAT); und durch Aktualisieren (updating) des Referenzregisters (46) zum Anzeigen der Position unmittelbar folgend den verbleibenden Bits in dem aktiven Register.

4. Der Mikroprozessor nach Anspruch 3, **dadurch gekennzeichnet, daß** das Referenzregister (46) den Vorratsraum in dem aktiven Register (CAT) anzeigt, und wobei der Operator Mittel (64, 66, 68) aufweist, um, das Referenzregister zu aktualisieren mit der Differenz zwischen seinem Inhalt und dem zweiten Parameter (L), wenn das Vorzeichen der Differenz positiv ist und mit der Summe der Differenz und der Größe (w) des aktiven Registers, wenn das Vorzeichen negativ ist.

5. Ein Mikroprozessor, **dadurch gekennzeichnet, daß** er einen Operator aufweist, und zwar gewidmet einer Extraktion oder einem Herausziehen von Codes und mit variabler Länge aus einer Sequenz von angrenzenden Codes, wobei der Operator assoziiert ist mit einem gewidmeten Befehl, der einen Parameter (L) verwendet, der die Länge einer Gruppe von Bits die herausgezogen werden sollen, anzeigt, wobei der Operator auf den Befehl anspricht durch Herausziehen der Anzahl von Bits angezeigt durch den Parameter aus einem aktiven Register (XTA), und zwar startend von dem Ende einer Gruppe der Bits, die aus dem aktiven Register durch eine vorhergehende Ausführung des gewidmeten Befehls herausgezogen wurden.

6. Der Mikroprozessor nach Anspruch 5, **dadurch gekennzeichnet, daß** der Operator ein Referenzregister (74) aufweist, welches für jede Ausführung des gewidmeten Befehls aktualisiert wird, um die Position anzuzeigen, aus der die Gruppe von Bits aus dem aktiven Register (XTA) zu extrahieren oder herauszuziehen ist.

7. Der Mikroprozessor nach Anspruch 6, **dadurch gekennzeichnet, daß** dann, wenn der Parameter (L) und das Referenz- bzw. Bezugsregister (74) anzeigen, daß die letzten aus dem aktiven Register (XTA) herauszuziehenden Bits in ihrer Zahl ungenügend zur Bildung der Gruppe sind, der Operator auf den gewidmeten Befehl anspricht durch Herausziehen der letzten Bits des aktiven Registers und der fehlenden Bits, um die Gruppe am Ende eines Hilfsregisters der gleichen Größe wie das aktive Register zu vollenden; durch Übertragen des Inhalts des Hilfsregisters (72) in das aktive Register; und durch Aktualisieren des Bezugsregisters zum Anzeigen der Position unmittelbar darauf folgend auf die fehlenden Bits in dem aktiven Register.

8. Der Mikroprozessor nach Anspruch 7, **dadurch gekennzeichnet, daß** das Bezugs- oder Referenzregister (74) die Anzahl der verbleibenden Bits, die aus dem aktiven Register herausgezogen werden sollen, anzeigt, und daß der Operator Mittel (76, 78, 92, 100) aufweist, um das Bezugs- oder Referenzregister zu aktualisieren mit der Differenz zwischen seinem Inhalt und dem Parameter (L), wenn das Vorzeichen der Differenz positiv ist und mit der Summe der Differenz und der Größe des aktiven Registers (w), wenn das Vorzeichen negativ ist.

9. Mikroprozessor nach einem der Ansprüche 1 bis 4, in Kombination mit dem Mikroprozessor eines der Ansprüche 5 bis 8.

## Claims

1. A microprocessor **characterized in that** it includes an operator dedicated to a concatenation of variable-length codes to form a sequence of contiguous codes, the operator being associated with a dedicated instruction using two parameters, a first one (D) of which is a word containing a group of bits and the second one (L) of which indicates the length of the group of bits, the operator responding to the dedicated instruction by isolating in the first parameter the group of bits having the length indicated by the second parameter and by inserting the bit group so isolated into an active register (CAT), in concatenation with a bit group which has been inserted in the active register by a previous execution of the dedicated instruction.

2. The microprocessor of claim 1, **characterized in that** the operator includes a reference register (46) updated upon each execution of the dedicated instruction to indicate the position from which the bit group is to be inserted in the active register (CAT).

3. The microprocessor of claim 2, **characterized in that**, when the second parameter (L) and the reference register (46) indicate that the spare room in the active register (CAT) is insufficient for receiving the bit group, the operator responds to the dedicated instruction by transferring the content of the active register into an auxiliary register (56) of same size and completing the auxiliary register with the first bits of the group; by inserting the remaining bits of the group at the beginning of the active register (CAT); and by updating the reference register (46) to indicate the position immediately following the remaining bits in the active register.

4. The microprocessor of claim 3, **characterized in that** the reference register (46) indicates the spare room in the active register (CAT), and wherein the operator includes means (64, 66, 68) for updating the reference register with the difference between its content and the second parameter (L) if the sign of the difference is positive, and with the sum of the difference and of the size (w) of the active register if the sign is negative.

5. A microprocessor **characterized in that** it includes an operator dedicated to an extraction of variable-length codes from a sequence of contiguous codes, the operator being associated with a dedicated instruction using a parameter (L) which indicates the length of a group of bits to be extracted, the operator responding to the instruction by extracting from an active register (XTA) the number of bits indicated by the parameter, starting from the end of a group of bits which has been extracted from the active register by a preceding execution of the dedicated instruction.

6. The microprocessor of claim 5, **characterized in that**, the operator includes a reference register (74) updated for each execution of the dedicated instruction to indicate the position from which the group of bits is to be extracted from the active register (XTA).

7. The microprocessor of claim 6, **characterized in that** when the parameter (L) and the reference register (74) indicate that the last bits to be extracted from the active register (XTA) are in insufficient number to form the group, the operator responds to the dedicated instruction by extracting the last bits of the active register and the missing bits to complete the group at the end of an auxiliary register of same size as the active register; by transferring the content of the auxiliary register (72) into the active register; and by updating the reference register to indicate the position immediately following the missing bits in the active register.

8. The microprocessor of claim 7, **characterized in that** the reference register (74) indicates the number of remaining bits to be extracted from the active register, and the operator includes means (76, 78, 92, 100) for updating the reference register with the difference between its content and the parameter (L) if the sign of the difference is positive, and with the sum of the difference and of the size of the active register (w) if the sign is negative.

9. The microprocessor of any of claims 1 to 4, in combination with the microprocessor of any of claims 5 to 8.
